# EUROPÄISCHE PATENTSCHRIFT

(11) **EP 0 457 063 B1**
(45) Veröffentlichungstag und Bekanntmachung des Hinweises auf die Patenterteilung: **28.06.1995**
(21) Anmeldenummer: 91106503.5
(22) Anmeldetag: 23.04.1991
(51) Int. Cl.: B60H 1/34

(54) **Belüftungseinrichtung für den Innenraum eines Fahrzeuges**
Ventilating device for the vehicle compartment
Dispositif de ventilation de l'habitacle d'un véhicule

(30) Priorität: 18.05.1990 DE 4016026
(43) Veröffentlichungstag der Anmeldung: 21.11.1991
(73) Patentinhaber: Gebr. Happich GmbH, D-42097 Wuppertal (DE)
(72) Erfinder: Jäckel, Helmut, W-5620 Velbert 15 (DE); Celik, Fahri, W-5600 Wuppertal 2 (DE)

(56) Entgegenhaltungen:
- DE-A- 2 031 986
- DE-A- 3 438 740
- DE-A- 3 941 699
- FR-A- 2 174 906
- FR-A- 2 650 225
- GB-A- 1 452 270

## Beschreibung

Die Erfindung bezieht sich auf eine Belüftungseinrichtung für den Innenraum eines Fahrzeuges, mit einem eine Lufteintrittsöffnung und eine Luftaustrittsöffnung aufweisenden Gehäuse, das im Bereich der Lufteintrittsöffnung mit einer manuell betätigbaren Absperreinrichtung und im Bereich der Luftaustrittsöffnung mit einem mit Luftleitlamellen versehenen Einsatz ausgerüstet ist.

Eine Belüftungseinrichtung der gattungsgemäßen Art ist z.B. in der DE-A-20 31 986 gezeigt und beschrieben. Diese bekannte Belüftungseinrichtung weist als Absperreinrichtung ein Klappenventil auf, das innerhalb des Gehäuses hinter dem die Luftleitlamellen aufweisenden Einsatz verdrehbar angeordnet ist. Durch die bekannte Anordnung des Klappenventils wird für das Gehäuse eine relativ große Bauhöhe benötigt. Zum anderen kommt es zu einer unerwünschten Verwirbelung der die Belüftungseinrichtung durchsetzenden Luft, und zwar über nahezu den gesamten Schwenkbereich des Klappenventils mit einer negativen Beeinflussung der Luftaustrittsgeschwindigkeit.

Die der Erfindung zugrundeliegende Aufgabe besteht somit darin, eine Belüftungseinrichtung der eingangs näher erwähnten Art zur Verfügung zu stellen, die eine nur geringe, den Einbauanforderungen gerecht werdende Bauhöhe aufweist und die sich auch insbesondere dadurch auszeichnen soll, daß die in die Lufteintrittsöffnung einströmende Luft, unabhängig von der jeweiligen Einstellung der Absperreinrichtung, keine Richtungsänderung erfährt.

Zur Lösung dieser Aufgabe ist erfindungsgemäß vorgesehen, daß die Absperreinrichtung zwei Drosselklappen aufweist, die zum Verschließen der Lufteintrittsöffnung bis in Berührungsanlage gegeneinander bewegbar und die zum Öffnen der Lufteintrittsöffnung voneinander wegbewegbar am Gehäuse gelagert sind. Dabei ist bevorzugt vorgesehen, daß die Drosselklappen schwenkbeweglich am Gehäuse angelenkt sind und in einer ersten Endstellung, in der ihre einander zugewandten Längsränder gehäusemittig aneinanderliegen, die Lufteintrittsöffnung verschlißen, während sie in einer zweiten Endstellung, in der ihre einander zugewandten Längsränder voneinander beabstandet sind, die Lufteintrittsöffnung freigeben.

Gemäß der erfindungsgemäßen Lehre sind die Drosselklappen nicht mehr innerhalb des Gehäuses schwenkbeweglich gelagert, so daß der dadurch im Vergleich zum Stand der Technik eingesparte Platz einer verringerten Bauhöhe der Belüftungseinrichtung zugute kommt. Bei der Bewegung der Drosselklappen aus der geschlossenen Stellung in die geöffnete Stellung, kann die Luft geradlinig durch die Lufteintrittsöffnung strömen, so daß es nicht mehr zu einer Luftverwirbelung und auch nicht mehr zu einer Beeinflussung der Luftaustrittsgeschwindigkeit kommt. Es wird also ein gleichmäßiger Luftaustritt über den ganzen Öffnungsquerschnitt der Luftaustrittsöffnung bzw. eine besonders strömungsgünstige Luftdurchsetzung durch die Belüftungseinrichtung erreicht.

Gemäß einer bevorzugten Ausgestaltung der Erfindung kann vorgesehen sein, daß die Drosselklappen über gegenläufig arbeitende Bewegungsmittel miteinander verbunden sind, derart, daß sich bei einer Bewegung der einen Drosselklappe in die geöffnete oder geschlossene Stellung die andere Drosselklappe ebenfalls in die geöffnete bzw. geschlossene Stellung bewegt. Hierdurch ergibt sich bei geringen Herstellungskosten eine optimale Funktionssicherheit.

Eine weitere Ausgestaltung der Erfindung sieht vor, daß das Gehäuse eine rechteckige Grundform besitzt, die Lufteintrittsöffnung einen geringeren Öffnungsquerschnitt als die Luftaustrittsöffnung aufweist, die freien Endbereiche der Gehäuselängswände zur Lufteintrittsöffnung hin gekrümmt sind und die Drosselklappen ein der Krümmung der Gehäuselängswände angepaßtes Querschnittsprofil aufweisen. Eine solche Ausgestaltung ist besonders günstig für Belüftungseinrichtungen, die zum Einbau in Großraumfahrzeugen, wie Omnibussen bestimmt sind. Selbstverständlich kann eine Belüftungseinrichtung der erfindungsgemäßen Art aber auch anderweitig, z.B. in der Armaturentafel eines Personen- oder Lastkraftwagens angeordnet werden.

Bevorzugt ist weiterhin vorgesehen, daß die Drosselklappen das Gehäuse eng anliegend übergreifen und jeweils einen Stegteil mit einer Größe aufweisen, der mindestens dem halben Öffnungsquerschnitt der Lufteintrittsöffnung entspricht und daß sich an die freien Stegteilenden rechtwinklig abstehende Flansche anschließen, die über Gelenkzapfen mit den Gehäusestirnwänden verbunden sind. Das Gehäuseinnere bleibt somit völlig von den Drosselklappen frei.

Drei der vorgenannten Drosselklappenflansche sind an ihren freien Endbereichen jeweils mit einer Verzahnung ausgebildet, wobei die Verzahnungen zweier Flansche miteinander kämmen, während die Verzahnung des dritten Flanschs mit einem Zahnkranz eines zwei Zahnkränze aufweisenden Zahnrads kämmt, dessen zweiter Zahnkranz in Wirkverbindung mit dem Zahnkranz eines Stellrads der Absperreinrichtung steht. Auf diese Weise läßt sich ein leichtgängiges und insbesondere feinfühliges Betätigen der Drosselklappen realisieren.

Es kann noch vorgesehen sein, daß das Zahnrad in einer Gehäusestirnwand so gelagert ist, daß sich der mit dem Zahnkranz des in derselben Gehäusestirnwand gelagerten Stellrades innerhalb des Gehäuses befindet, während der andere, mit der Verzahnung des dritten Flanschs kämmende Zahnkranz gehäuseaußenseitig angeordnet ist.

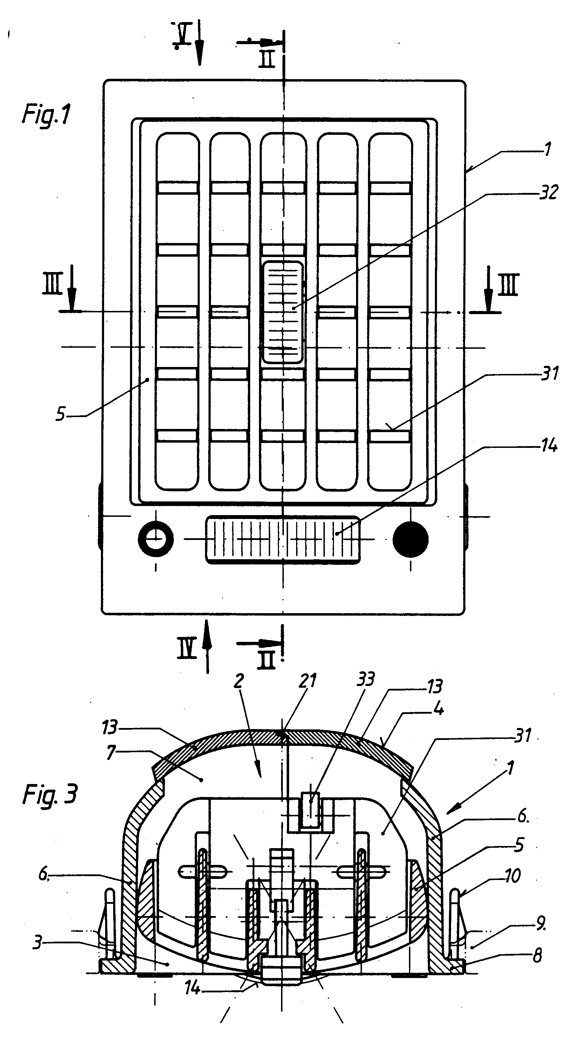

Ein Ausführungsbeispiel der Erfindung wird nachfolgend anhand der Zeichnung näher erläutert. Es zeigen
- Fig. 1: die Belüftungseinrichtung in Draufsicht,
- Fig. 2: einen Schnitt II - II nach Fig. 1,
- Fig. 3: einen Schnitt III - III nach Fig. 1,
- Fig. 4: eine Ansicht gemäß Pfeilrichtung IV in Fig. 1 und
- Fig. 5: eine Ansicht gemäß Pfeilrichtung V in Fig. 1.

Die neue Belüftungseinrichtung, die auch als "Lüfterdüse" bezeichnet werden kann, besteht aus einem Gehäuse 1 mit einer Lufteintrittsöffnung 2 und einer Luftaustrittsöffnung 3. Im Bereich der Lufteintrittsöffnung 2 ist das Gehäuse 1 mit einer Absperreinrichtung 4 und im Bereich der Luftaustrittsöffnung 3 ist das Gehäuse 1 mit einem Einsatz 5 ausgerüstet.

Das Gehäuse 1 besitzt eine rechteckige Grundform mit Gehäuseseitenwänden 6 und Gehäusestirnwänden 7. Die Gehäuseseitenwände 6 sind am freien Endbereich zur Lufteintrittsöffnung 2 hin gekrümmt, derart, daß der Öffnungsquerschnitt des Gehäuses 1 im Bereich der Lufteintrittsöffnung 2 geringer ist als im Bereich der Luftaustrittsöffnung 3. Vorderseitig, d. h. luftaustrittsseitig, ist das Gehäuse mit einem umlaufenden Flansch 8 ausgebildet, der sich im Einbauzustand gegen eine Anschlußwandung 9 abstützt, welche z.B. einen Luftkanal in einem Omnibus begrenzt. An der Flanschrückseite sind etwa parallel zu den Gehäuseseitenwänden 6 ausgerichtete Klipselemente 10 angeordnet, die dazu dienen, die gesamte Lüfterdüse in einer Aussparung der Anschlußwandung 9 durch eine Klipsmontage zu befestigen. Das Gehäuse 1 weist weiterhin eine parallel zu den Gehäusestirnwänden verlaufende Zwischenwand 11 auf, um innerhalb des Gehäuses 1 eine Kammer 12 auszubilden.

Die Absperreinrichtung 4 besteht aus zwei Drosselklappen 13, einem Stellrad 14 und aus einem Getriebe 15. Die Drosselklappen 13 weisen jeweils einen Stegteil mit einer der Gehäuselänge entsprechenden Länge auf. Ferner weisen die Drosselklappen 13 ein der Krümmung der Gehäuselängswände 6 angepaßtes Querschnittsprofil und eine Größe auf, die jeweils geringfügig größer als der halbe Öffnungsquerschnitt der Lufteintrittsöffnung 2 bemessen ist. Die einander zugewandten Längsränder der Drosselklappen 13 sind jeweils stufenförmig abgesetzt, wobei sich die Absetzungen 21 im geschlossenen Zustand der Drosselklappen 13 übergreifen und damit einen dichten Abschluß bewirken. Die Drosselklappen 13, die das Gehäuse 1 eng anliegend übergreifen, weisen an ihren freien Stegteilenden rechtwinklig abstehende Flansche 16, 17, 18 und 19 auf, die über nicht näher dargestellte Gelenkzapfen mit den Gehäusestirnwänden 7 verbunden sind. Die durch die nicht gezeigten Gelenkzapfen gebildeten Drehpunkte sind mit 20 bezeichnet.

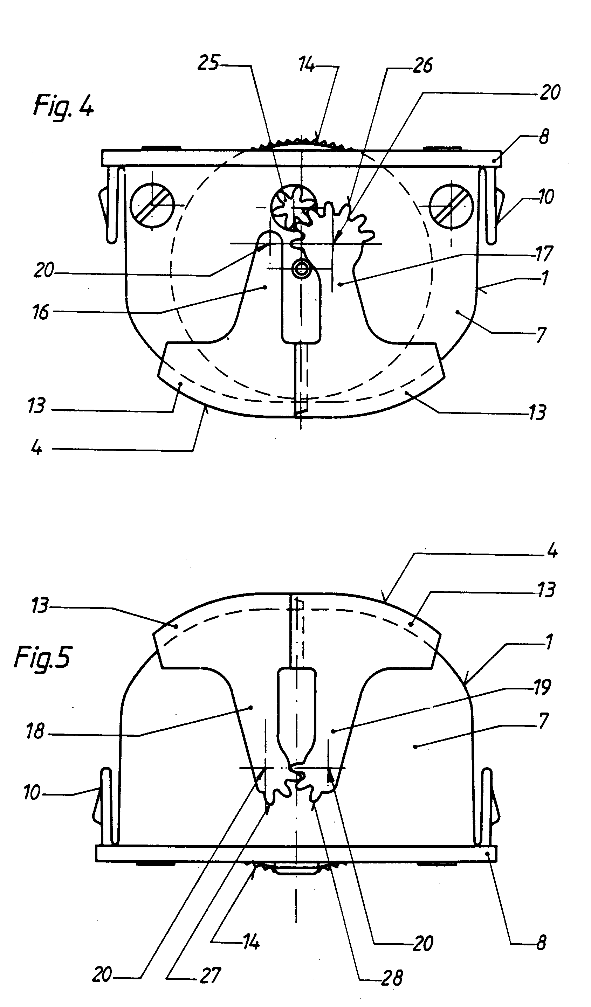

Das Getriebe 15 umfaßt das Stellrad 14 mit einem konzentrischen Zahnkranz 22, ein Zahnrad 23 mit zwei Zahnkränzen 24 und 25 und eine Verzahnung 26, die am freien Endbereich des Flanschs 17 ausgebildet ist. Der Zahnkranz 22 des Stellrads 14 kämmt mit dem Zahnkranz 24 des Zahnrads 23 und der Zahnkranz 25 des Zahnrads 23 kämmt mit der Verzahnung 26 des Flanschs 17. Wird nun das Stellrad 14, z.B. mit dem Daumen einer menschlichen Hand gedreht, so erfolgt zwangsläufig ein Verschwenken einer der Drosselklappen 13. Da die zweite Drosselklappe 13 dabei ebenfalls im Sinne einer Öffnungs- oder Schließbewegung verschwenkt werden soll, sind die Flansche 18 und 19 der Drosselklappen 13 über eine ineinandergreifende, aus Fig. 5 ersichtliche Verzahnung 27, 28 miteinander gekuppelt.

Das Stellrad 14, das am Umfang mit einer Rändelung 29 od. dgl. versehen ist, befindet sich in der Kammer 12 des Gehäuses 1, stützt sich zum einen an der Zwischenwand 11 ab und ist zum anderen über einen Gelenkzapfen 30 in einer Gelenkbohrung einer Stirnwand 7 gelagert. Das Zahnrad 23 sitzt mit einem, zwischen den Zahnkränzen 24 und 25 befindlichen Schaft in einer als Lagerauge 30 ausgebildeten Aufnahme der Gehäusestirnwand 7. Damit ist der eine Zahnkranz 24 des Zahnrades 23 gehäuseinnenseitig und der andere Zahnkranz 25 des Zahnrads 23 gehäuseaußenseitig angeordnet. Bei der dargestellten Ausführungsform der neuen Belüftungseinrichtung, ist die getriebeseitige Gehäusestirnwand 7 als separates Bauteil hergestellt und zusammen mit dem Stellrad 14 und dem Zahnrad 23 z.B. durch eine Klipsmontage mit dem Gehäuse 1 verbunden.

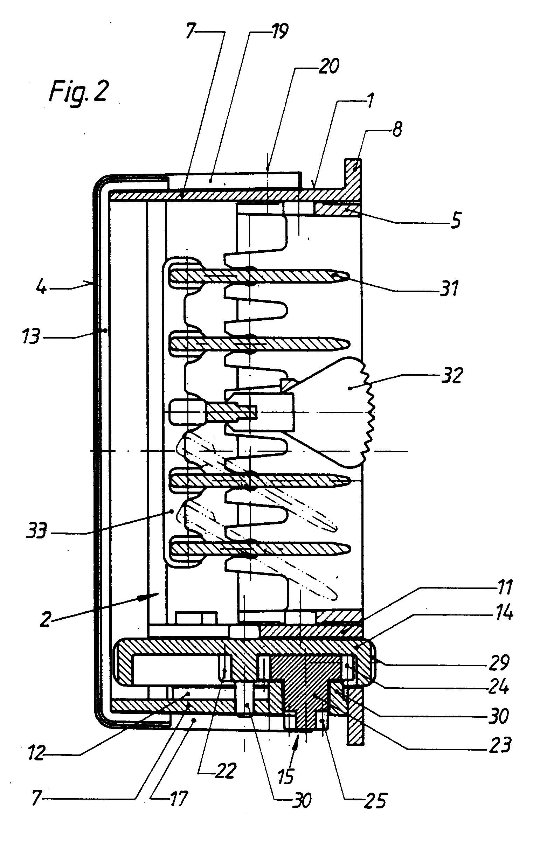

Der Einsatz 5 entspricht im wesentlichen herkömmlicher Bauart und ist daher nicht näher zu erläutern. Es soll lediglich darauf hingewiesen sein, daß die Luftleitlamellen 31 über ein Stellglied 32 und über einen mit den Luftleitlamellen 31 in Verbindung stehenden Mitnehmer 33 in einer aus Fig. 2 ersichtlichen Weise gegenläufig schwenkbeweglich gelagert sind. Zudem kann der gesamte Einsatz 5, wie in Fig. 3 gezeigt, innerhalb des Gehäuses 1 hin und her geschwenkt werden, so daß sich insgesamt eine optimale Lufteinstellung realisieren läßt.

Vorzugsweise bestehen die Einzelteile der neuen Belüftungseinrichtung aus Kunststoff-Spritzgußteilen.

## Patentansprüche

1. Belüftungseinrichtung für den Innenraum eines Fahrzeuges, mit einem eine Lufteintrittsöffnung (2) und eine Luftaustrittsöffnung (3) aufweisenden Gehäuse (1), das im Bereich der Lufteintrittsöffnung mit einer manuell betätigbaren Absperreinrichtung (4) und im Bereich der Luftaustrittsöffnung mit einem mit Luftleitlamellen (31) versehenen Einsatz (5) ausgerüstet ist, dadurch gekennzeichnet, daß die Absperreinrichtung (4) zwei Drosselklappen (13) aufweist, die zum Verschließen der Lufteintrittsöffnung (2) bis in Berührungsanlage gegeneinander bewegbar und die zum Öffnen der Lufteintrittsöffnung voneinander wegbewegbar am Gehäuse (1) gelagert sind.

2. Belüftungseinrichtung nach Anspruch 1, dadurch gekennzeichnet, daß die Drosselklappen (13) schwenkbeweglich am Gehäuse (1) angelenkt sind und in einer ersten Endstellung, in der ihre einander zugewandten Längsränder gehäusemittig aneinanderliegen, die Lufteintrittsöffnung (2) verschließen, während sie in einer zweiten Endstellung, in der ihre einander zugewandten Längsränder voneinander beabstandet sind, die Lufteintrittsöffnung freigeben.

3. Belüftungseinrichtung nach Anspruch 1 oder 2, dadurch gekennzeichnet, daß die Drosselklappen (13) über gegenläufig arbeitende Bewegungsmittel miteinander verbunden sind, derart, daß sich bei einer Bewegung der einen Drosselklappe (13) in die geöffnete oder geschlossene Stellung die andere Drosselklappe ebenfalls in die geöffnete bzw. geschlossene Stellung bewegt.

4. Belüftungseinrichtung nach mindestens einem der Ansprüche 1 bis 3, dadurch gekennzeichnet, daß das Gehäuse (1) eine rechteckige Grundform besitzt, die Lufteintrittsöffnung (2) einen geringeren Öffnungsquerschnitt als die Luftaustrittsöffnung (3) aufweist, die freien Endbereiche der Gehäuselängswände (6) zur Lufteintrittsöffnung hin gekrümmt sind und die Drosselklappen (13) ein der Krummung der Gehäuselängswände (6) angepaßtes Querschnittsprofil aufweisen.

5. Belüftungseinrichtung nach wenigstens einem der Ansprüche 1 bis 4, dadurch gekennzeichnet, daß die Drosselklappen (13) das Gehäuse (1) eng anliegend übergreifen und jeweils einen Stegteil mit einer Größe aufweisen, der mindestens dem halben Öffnungsquerschnitt der Lufteintrittsöffnung (2) entspricht und daß sich an die freien Stegteilenden rechtwinklig abstehende Flansche (16, 17, 18 und 19) anschließen, die über Gelenkzapfen mit den Gehäusestirnwänden (7) verbunden sind.

6. Belüftungseinrichtung nach wenigstens einem der Ansprüche 1 bis 5, dadurch gekennzeichnet, daß drei der Drosselklappenflansche (17, 18, 19) an ihren freien Endbereichen mit einer Verzahnung (26, 27, 28) ausgebildet sind, wobei die Verzahnungen (27, 28) zweier Flansche (18, 19) miteinander kämmen, während die Verzahnung (26) des dritten Flanschs (17) mit einem Zahnkranz (25) eines zwei Zahnkränze (24, 25) aufweisenden Zahnrads (23) kämmt, dessen zweiter Zahnkranz (24) in Wirkverbindung mit dem Zahnkranz (22) eines Stellrads (14) der Absperreinrichtung (4) steht.

7. Belüftungseinrichtung insbesondere nach Anspruch 6, dadurch gekennzeichnet, daß das Zahnrad (23) in einer Gehäusestirnwand (7) so gelagert ist, daß sich der mit dem Zahnkranz (22) des in derselben Gehäusestirnwand gelagerten Stellrades (14) innerhalb des Gehäuses (1) befindet, während der andere, mit der Verzahnung (26) des dritten Flanschs (17) kämmende Zahnkranz (25) gehäuseaußenseitig angeordnet ist.

## Claims

1. Ventilation device for the interior of a vehicle, with a housing (1), which has an air-inlet opening (2) and an air-outflow opening (3) and is equipped in the region of the air-inlet opening with a manually operable shut-off device (4) and in the region of the air-outflow opening with an insert (5), which is provided with air-guiding fins (31), characterized in that the shut-off device (4) has two dampers (13) which are mounted on the housing (1) in a manner such that they can move until they abut against each other, for closing the air-inlet opening (2), and such that they can move away from each other, for opening the air-inlet opening.

2. Ventilation device according to Claim 1, characterized in that the dampers (13) are coupled to the housing (1) in a manner such that they can swivel, and in a first end position, in which their longitudinal edges, which face each other, bear against each other in the centre of the housing, close the air-inlet opening (2), whereas in a second end position, in which their longitudinal edges, which face each other, are spaced apart from each other, they release the air-inlet opening.

3. Ventilation device according to Claim 1 or 2, characterized in that the dampers (13) are connected to each other in such a manner via moving means operating in opposite directions that when one damper (13) moves into the opened or closed position the other damper likewise moves into the opened or closed position.

4. Ventilation device according to at least one of Claims 1 to 3, characterized in that the housing (1) has a rectangular basic shape, the air-inlet opening (2) has a smaller opening cross-section than the air-outflow opening (3), the free end regions of the housing longitudinal walls (6) are curved towards the air-inlet opening and the dampers (13) have a cross-sectional profile matched to the curvature of the housing longitudinal walls (6).

5. Ventilation device according to at least one of Claims 1 to 4, characterized in that the dampers (13) engage over the housing (1) in a closely fitting manner and each have a web part of a size corresponding at least to half of the opening cross-section of the air-inlet opening (2), and in that flanges (16, 17, 18 and 19), which protrude at right angles, adjoin the free ends of the web parts, which flanges are connected to the housing end walls (7) via hinge pins.

6. Ventilation device according to at least one of Claims 1 to 5, characterized in that three of the damper flanges (17, 18, 19) are constructed with a toothing (26, 27, 28) at their free end regions, the toothings (27, 28) of two flanges (18, 19) mating with each other, whereas the toothing (26) of the third flange (17) mates with a toothed rim (25) of a gearwheel (23), which has two toothed rims (24, 25) and the second toothed rim (24) of which is in operative connection with the toothed rim (22) of an adjusting wheel (14) of the shut-off device (4).

7. Ventilation device in particular according to Claim 6, characterized in that the gearwheel (23) is mounted in such a manner in a housing end wall (7) that the [lacuna] with the toothed rim (22) of the adjusting wheel (14), mounted in the same housing end wall, is situated within the housing (1), whereas the other toothed rim (25), which mates with the toothing (26) of the third flange (17), is arranged outside the housing.

## Revendications

1. Dispositif de ventilation de l'habitacle d'un véhicule, avec un carter (1) présentant une ouverture d'entrée d'air (2) et une ouverture de sortie d'air (3) et équipé dans la zone de l'ouverture d'entrée d'air d'un dispositif d'isolement (44) à possibilité d'actionnement manuel, et, dans la zone de l'ouverture de sortie d'air, d'une garniture (5) pourvue de lamelles de guidage d'air (31), caractérise en ce que le dispositif d'isolation (4) présente deux clapets d'étranglement (13) qui sont déplaçables l'un en direction de l'autre, jusqu'à venir en appui de contact pour produire la fermeture de l'ouverture d'entrée d'air (2), et qui sont montés sur le carter (1) de façon à pouvoir s'écarter l'un de l'autre pour produire l'ouverture de l'ouverture d'entrée d'air

2. Dispositif de ventilation selon la revendication 1, caractérisé en ce que les clapets d'étranglement (13) sont articulés mobiles en pivotement sur le carter (1) et, dans une première position finale, dans laquelle leurs bords longitudinaux tournés l'une vers l'autre appuient l'une sur l'autre au centre du carter, obturent l'ouverture d'entrée d'air (2) tandis que, dans une deuxième position finale, dans laquelle leurs bords longitudinaux tournés l'un vers l'autre sont écartés l'un de l'autre, ils dégagent cette ouverture d'entrée d'air.

3. Dispositif de ventilation selon la revendication 1 ou 2, caractérisé en ce que les clapets d'étranglement (13) sont reliés ensemble par l'intermédiaire de moyens de déplacement travaillant à contresens, de manière que, lors d'un premier mouvement d'un premier clapet d'étranglement (13), de passage dans la position ouverte ou fermée, l'autre clapet d'étranglement se déplace également dans la position ouverte, respectivement fermée.

4. Dispositif de ventilation selon au moins l'une des revendications 1 à 3, caractérisé en ce que le carter (1) a une fente de base rectangulaire, l'ouverture d'entrée d'air (2) présente une section transversale d'ouverture d'aire inférieure à celle de l'ouverture de sortie d'air (3), les zones d'extrémité libres des parois longitudinales de carter (6) étant incurvées en direction de l'ouverture d'entrée d'air et les clapets d'étranglement (13) présentant un profil de section transversale adapté à la courbure des parois longitudinales de carter (6).

5. Dispositif de ventilation selon au moins l'une des revendications 1 à 4, caractérisé en ce que les clapets d'étranglement (13) entourent en appuyant étroitement dessus le carter (1) et présentent chacun une partie de nervure ayant une taille correspondant au moins à la demi section transversale d'ouverture du dispositif d'entrée d'air (2) et en ce que des rebords (16, 17, 18 et 19) faisant saillie à angle droit se raccordent aux extrémités libres des parties de nervure et sont reliés aux parois frontales de carter (7), à l'aide de tourillons d'articulation.

6. Dispositif de ventilation selon au moins l'une des revendications 1 à 5, caractérisé en ce que trois des rebords (17, 18, 19) des clapets d'étranglement sont réalisés à leurs zones d'extrémité libres avec une denture (26, 27, 28), les dentures (27, 28) de deux rebords (18, 19) s'engrenant ensemble, tandis que la denture (26) du troisième rebord (17) s'engrène avec une couronne dentée (25) d'une roue dentée (23) présentant deux couronnes dentées (24, 27) et dont la deuxième couronne dentée (24) est reliée fonctionnellement à la couronne dentée (22) d'une roue de réglage (14) du dispositif d'isolement (4).

7. Dispositif de ventilation en particulier selon la revendication 6, caractérisé en ce que la roue dentée (23) est montée dans une paroi frontale de carter (7), de manière que la couronne dentée d'engrenant avec la couronne dentée (22) de la roue de réglage (14) montée dans la même paroi frontale de carter se trouve à l'intérieur du carter (1), tandis que l'autre couronne dentée (2) s'engrenant avec la denture (26) du troisième rebord (17) est disposée à l'extérieur du carter.
